# EUROPEAN PATENT SPECIFICATION

(11) **EP 3 499 015 B1**
(45) Date of publication and mention of the grant of the patent: **22.12.2021**
(21) Application number: 17839372.4
(22) Date of filing: 04.08.2017
(51) Int. Cl.: F02M 35/10, F02M 35/024, F01M 13/00, F02B 67/00, F02M 35/16, F02M 35/02

(54) **INTAKE STRUCTURE FOR AN INTERNAL COMBUSTION ENGINE MOUNTED IN A VEHICLE**
LUFTANSAUGSTRUKTUR FÜR VERBRENNUNGSMOTOR IN EINEM FAHRZEUG
STRUCTURE D'ADMISSION D'AIR POUR UN MOTEUR À COMBUSTION INTERNE MONTÉ DANS UN VEHICULE

(30) Priority: 10.08.2016 JP 2016157186
(43) Date of publication of application: 19.06.2019
(73) Proprietor: Honda Motor Co., Ltd., Tokyo 107-8556 (JP)
(72) Inventor: KUBO, Toshihiro, Wako-shi Saitama 351-0193 (JP); MAKI, Satoru, Wako-shi Saitama 351-0193 (JP)
(74) Representative: Dehns
(86) International application number: PCT/JP2017/028437
(87) International publication number: WO 2018/030301

(56) References cited:
- JP-A- H11 294 271
- JP-A- 2011 202 508
- JP-A- 2012 207 557
- JP-A- 2016 005 946
- JP-U- 3 142 128
- US-A1- 2014 174 394

## Description

### [Technical Field]

The present invention relates to an intake structure for an internal combustion engine mounted on a vehicle.

### [Background Art]

Intake systems for internal combustion engines include an intake pipe extending from the cylinder head of an internal combustion engine and a connecting tube or intake joint passageway tube extending from the intake pipe through a throttle body, etc. to provide an intake passageway leading to an air cleaner device. Fresh air from the air cleaner device is delivered through the intake passageway to a combustion chamber in the internal combustion engine.

The air cleaner device has an air cleaner case compartmentalized by an air cleaner element into a non-purifying chamber and a purifying chamber. In order to secure the intake passageway to be long enough, the connecting tube is inserted from outside the air cleaner case into the purifying chamber in the air cleaner case over a long length (see, for example, PATENT DOCUMENT 1).

### [Prior Art Document]

### [Patent Document]

[PATENT DOCUMENT 1] JP 2016-5946 A

Since the purifying chamber in the air cleaner case is of a small volume, the connecting tube in the purifying chamber needs to be bent in order to elongate the connecting tube in the purifying chamber, as disclosed in PATENT DOCUMENT 1.

The duct or connecting tube disclosed in PATENT DOCUMENT 1 includes an inner duct in the purifying chamber. The inner duct has two bent portions, i.e., a first bent portion that is bent laterally from a portion which extends through the air cleaner case and a second bent portion bent further rearward.

### [Summary of the Invention]

### [Underlying Problem to be solved by the Invention]

Ducts or connecting tubes are usually made of rubber and is integrally formed in a tubular shape.

The duct disclosed in PATENT DOCUMENT 1 is also integrally formed in a tubular shape. However, since the inner duct has the two bent portions, i.e., the first bent portion and the second bent portion, it is not easy to produce the inner duct integrally in a tubular shape such that it has a plurality of bent portions.

The present invention has been made in view of the above problem. It is an object of the present invention to provide an intake structure for a vehicle-mounted internal combustion engine, which makes it easy to produce an intake joint passageway tube or connecting tube having bent portions.

### [Means to solve the Problem]

In order to accomplish the above object, there is provided in accordance with the present invention an intake structure for a vehicle-mounted internal combustion engine, including an air cleaner device having an air cleaner case compartmentalized by an air cleaner element into a non-purifying chamber and a purifying chamber; wherein an intake pipe extending from a cylinder head of the internal combustion engine mounted on a vehicle and the purifying chamber in the air cleaner case are held in fluid communication with each other by an intake joint passageway tube; wherein:
the intake joint passageway tube is made up of an inner intake joint passageway tube disposed in the purifying chamber in the air cleaner case and an outer intake joint passageway tube contiguous to the inner intake joint passageway tube; and
characterised in that:
   the inner intake joint passageway tube is divided into two half joint passageway tubes combined together, along a plane including substantially a central axis of the inner intake joint passageway tube; and in that:
   the outer intake joint passageway tube extends out of the air cleaner case;
   the inner intake joint passageway tube has a plurality of bent portions on a central axis plane including the central axis of the inner intake joint passageway tube, and is made up of a pair of an upper half joint passageway tube and a lower half joint passageway tube combined together, which are divided by the central axis plane;
   the inner intake joint passageway tube has a downstream end fitted in an upstream end of the outer intake joint passageway tube which is fitted in the air cleaner case;
   the inner intake joint passageway tube has upper and lower downstream engaging teeth engaging and coupled to upper and lower engaging tongues provided on the outer intake joint passageway tube; and
   the air cleaner case is provided with engaging protrusions having engaging pins on distal ends thereof, the engaging pins engaging in forwardly open engaging holes defined in upper and lower upstream engaging members on the inner intake joint passageway tube, thereby supporting the inner intake joint passageway tube.

With the above arrangement, the inner intake joint passageway tube that is housed in the small-volume purifying chamber in the air cleaner case and has at least one bent portion for an increased intake passageway length is made up of the two half joint passageway tubes that are combined together which are divided along the plane including the substantially central axis of the inner intake joint passageway tube. Therefore, the half joint passageway tubes can easily be formed, and the inner joint passageway tube can be constructed by combining together the half joint passageway tubes thus formed. Consequently, the inner joint passageway tube can easily be manufactured.

The plane including the substantially central axis of the inner intake joint passageway tube refers to a plane including the central axis of the inner intake joint passageway tube or an axis in a vicinity of the central axis.

With the above arrangement, the inner intake joint passageway tube has a plurality of bent portions on the central axis plane including the central axis and is divided into two upper and lower tubes by the central axis plane, the pair of the upper half joint passageway tube and the lower half joint passageway tube thus divided can easily be molded to shape.

With the above arrangement, the downstream end of the inner connecting tube is positioned in opposing relation to the upstream end of the outer connecting tube coaxially therewith, and while the engaging holes in the upper and lower upstream engaging members are being held in opposing relation to the respective engaging pins on the distal ends of the engaging protrusions, the inner connecting tube is displaced forward until the downstream end of the inner connecting tube is fitted into the upstream end of the outer connecting tube, and the upper and lower downstream engaging teeth of the inner connecting tube engage the respective upper and lower engaging tongues of the outer connecting tube, whereupon the inner connecting tube is coupled to the outer connecting tube. At the same time, the engaging pins on the distal ends of the engaging protrusions of the purifying chamber case member enter, via the forwardly opening ports, the engaging holes in the upper and lower upstream engaging members of the inner connecting tube and engage therein, whereupon the inner connecting tube is supported by the purifying chamber case member.

Therefore, the inner connecting tube can simply be installed in the purifying chamber case member with high working efficiency.

In the above arrangement, the inner intake joint passageway tube may be made of a molded resin.

With this arrangement, as the inner intake joint passageway tube is made of a molded resin, each of the paired half joint passageway tubes can easily be formed. Since the inner joint passageway tube that is more rigid than rubber or the like can be constructed by combining together the paired half joint passageway tubes thus formed, the inner intake joint passageway tube is prevented from being dented due to air intake, resulting in increased drivability.

In the above arrangement, the outer intake joint passageway tube may extend forward from the air cleaner case and be held in fluid communication with the intake pipe through a throttle body; and
a central axis of the outer intake joint passageway tube and a central axis of the inner intake joint passageway tube that is contiguous to the outer intake joint passageway tube may lie in substantially the same inclined plane inclined forward and downward from a horizontal plane.

With the above arrangement, inasmuch as the continuous intake passageway that is provided by the inner intake joint passageway tube in the purifying chamber in the air cleaner case and the outer intake joint passageway tube extending forward from the air cleaner case is disposed on substantially the same inclined plane that is inclined forward and downward, intake air that passes through the intake passageway flows smoothly with minimized resistance for an increased intake efficiency.

In the above arrangement, the inner intake joint passageway tube is coupled to an end of the outer intake joint passageway tube fitted in and supported by the air cleaner case; and each of the paired half joint passageway tubes of the inner intake joint passageway tube is supported by the air cleaner case.

With the above arrangement, the inner intake joint passageway tube is coupled to the end of the outer intake joint passageway tube that is fitted in and supported by the air cleaner case, and the paired half joint passageway tubes are supported by the air cleaner case. Therefore, the output intake joint passageway tube and the inner intake joint passageway tube are integrally supported by the air cleaner case, and the half joint passageway tubes are effectively supported by the air cleaner case.

In the above arrangement, a breather passage may be defined in the purifying chamber in the air cleaner case; and the breather passage may be made up of a first breather passage having a front portion held in fluid communication with a breather tube disposed outward of the air cleaner case and extending obliquely rearward and upward, and a second breather passage contiguous to a rear end of the first breather passage, the second breather passage being compartmentalized by a rib and extending downward to a case bottom surface on which a drain tube is disposed.

With the above arrangement, the breather passage in the purifying chamber in the air cleaner case is made up of the first breather passage whose front portion is held in fluid communication with the breather tube and which extends rearward and upward, and the second breather passage that is contiguous to the rear end of the first breather passage, is compartmentalized by the rib, and extends downward to the case bottom surface on which the drain tube is disposed. When blow-by gases are drawn through the breather tube into the purifying chamber in the air cleaner case, the blow-by gases initially enter the first breather passage and are then separated into a gas component and a liquid component by the first breather passage that is inclined rearward and upward. The gas component is delivered together with intake air again into a combustion chamber in the internal combustion engine for combustion. The separated liquid component, such as lubricating oil, etc., is accumulated in the first breather passage, and then flows from the rear end of the first breather passage down into the second breather passage. The liquid component flows down the second breather passage that extends downward along the rib, and then reaches the bottom case surface, so that the liquid component can easily be led to the drain tube that serves as a drain port.

In the above arrangement, the first breather passage may be defined as a channel-shaped passage on a step projecting inward from a vehicle-widthwise case side wall of the air cleaner case, by a side plate elongated in forward and rearward directions and attached to the step.

With the above arrangement, the first breather passage is formed as a channel-shaped passage on the step by the partition side plate that is elongate in the forward and rearward directions and attached to the step that projects inward from the case inner side wall, which faces a transverse direction or vehicle widthwise direction, of the air cleaner case. Therefore, the first breather passage which is made up of a small number of parts and extends obliquely rearward and upward can simply be installed, with a small number of parts, in the purifying chamber in the air cleaner case.

### [Advantageous Effects of Invention]

According to the present invention, the inner intake joint passageway tube that is housed in the small-volume purifying chamber in the air cleaner case and has at least one bent portion for an increased intake passageway length is made up of the two half joint passageway tubes that are combined together which are divided along the plane including the central axis of the inner intake joint passageway tube. Therefore, the paired half joint passageway tubes can easily be formed, and the inner joint passageway tube can be constructed by combining together the two half joint passageway tubes thus formed. Consequently, the inner joint passageway tube can easily be manufactured.

### [Brief Description of Drawings]

FIG. 1 is a left side elevational view of a motorcycle in its entirety incorporating an embodiment of the present invention;
FIG. 2 is a left side elevational view of a power unit mounted on the motorcycle;
FIG. 3 is a right side elevational view of the power unit;
FIG. 4 is a front elevational view of the power unit;
FIG. 5 is a plan view, partly in section, of an internal combustion engine in a front portion of the power unit;
FIG. 6 is a perspective view of an air cleaner device and its periphery of the power unit;
FIG. 7 is a plan view, partly in section, of the air cleaner device;
FIG. 8 is a perspective view illustrating the inside of a purifying chamber case of the air cleaner device as viewed from an opening thereof;
FIG. 9 is a fragmentary perspective view, partly in section, illustrating the inside of the purifying chamber case;
FIG. 10 is a left side elevational view illustrating an inner connecting tube disposed in the purifying chamber case;
FIG. 11 is a left side elevational view illustrating the purifying chamber case, with the inner connecting tube removed;
FIG. 12 is a sectional view taken along line XII-XII of FIG. 11; and
FIG. 13 is a left side elevational view, partly in section, of the power unit.

### [Mode for carrying out the Invention]

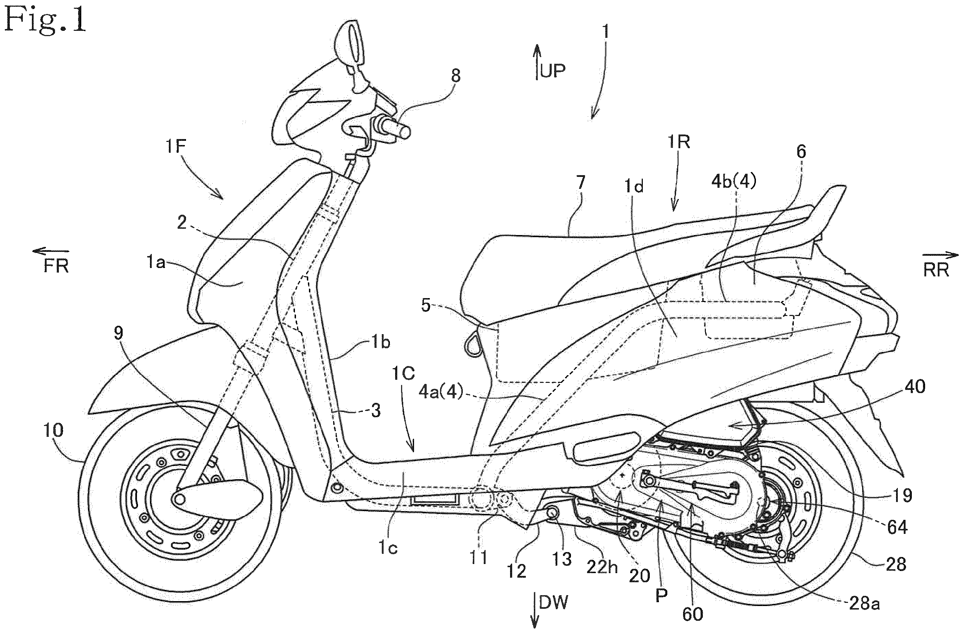

An embodiment of the present invention will hereinafter be described with reference to FIGS. 1 through 13.

FIG. 1 illustrates a scooter-type motorcycle 1 incorporating a unitary swing internal combustion engine relating to the present embodiment.

In the present description, forward, rearward, leftward, rightward, upward, and downward directions, and similar directional expressions are defined in accordance with the normal orientations of the motorcycle 1 according to the present embodiment that include a forward direction along which the motorcycle 1 moves straight ahead. In the drawings, the reference characters FR represent a forward direction, RR a rearward direction, LH a leftward direction, RH a rightward direction, UP an upward direction, and DW a downward direction.

A vehicle body front portion 1F and a vehicle body rear portion 1R are interconnected by a low floor portion 1C. A vehicle body frame that serves as a vehicle body skeleton is generally made up of a down tube 3 and main pipes 4.

The down tube 3 extends downward from a head pipe 2 of the vehicle body front portion 1F. The down tube 3 is bent downward at a lower end thereof and extends rearward beneath the floor portion 1C. The down tube 3 has a rear end to which main pipes 4 are coupled as a pair of left and right main pipes. The main pipes 4 include slanted portions 4a extending obliquely rearward and upward and having upper portions bent rearward into horizontal portions 4b that extend substantially horizontally.

A storage box 5 and a fuel tank 6 are supported respectively in front and rear positions between the main pipes 4. The storage box 5 and the fuel tank 6 are covered with a rider's seat 7 disposed thereover.

In the vehicle body front portion 1F, a handle 8 is pivotally supported on the head pipe 2 upwardly thereof. A front fork 9 extends downward from the head pipe 2 and has a lower end on which a front wheel 10 is supported by an axle.

A support bracket 11 projects rearward from front end portions of the main pipes 4. A power unit P is swingably coupled to and supported on the support bracket 11 by a link 12.

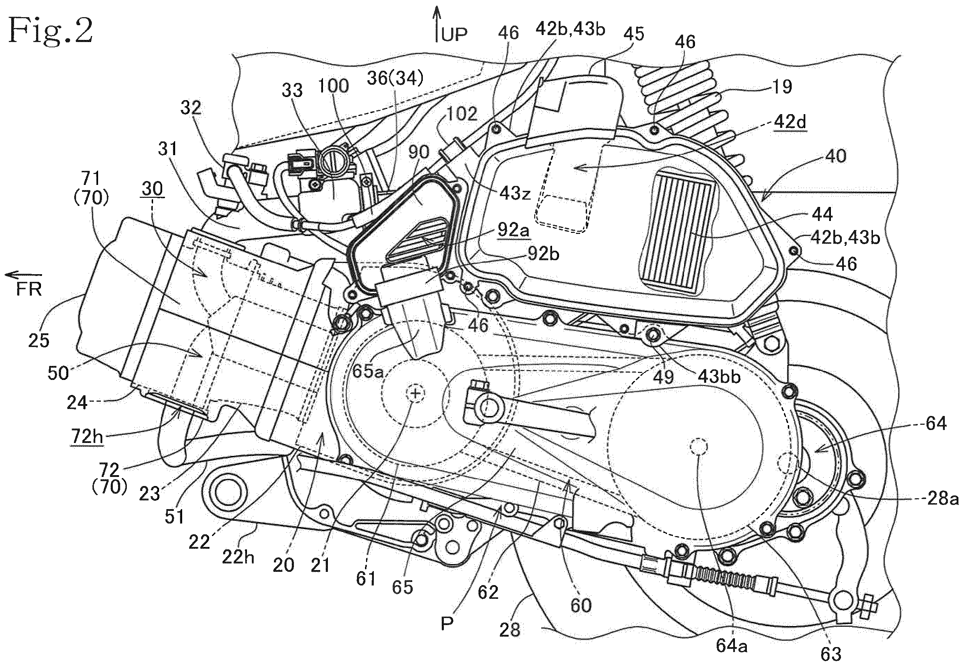

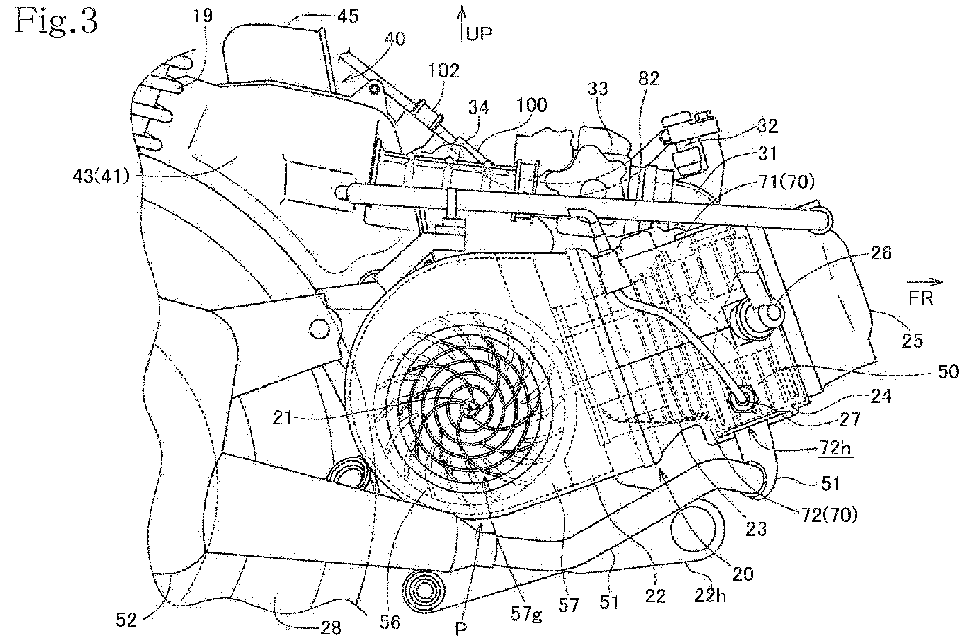

As depicted in FIGS. 2 and 3, the power unit P includes in a front portion thereof a single-cylinder 4-stroke air-cooled internal combustion engine 20. The internal combustion engine 20 has a crankcase 22 in which a crankshaft 21 that is oriented transversely or in widthwise directions is rotatably supported. The internal combustion engine 20 includes a cylinder block 23, a cylinder head 24, and a cylinder head cover 25 that are successively stacked on the crankcase 22 and project forward therefrom in a forwardly inclined orientation that is nearly a substantially horizontal orientation. A pair of left and right engine hangers 22h project forward from a lower portion of the crankcase 22 and have ends coupled to the link 12 by a pivot shaft 13.

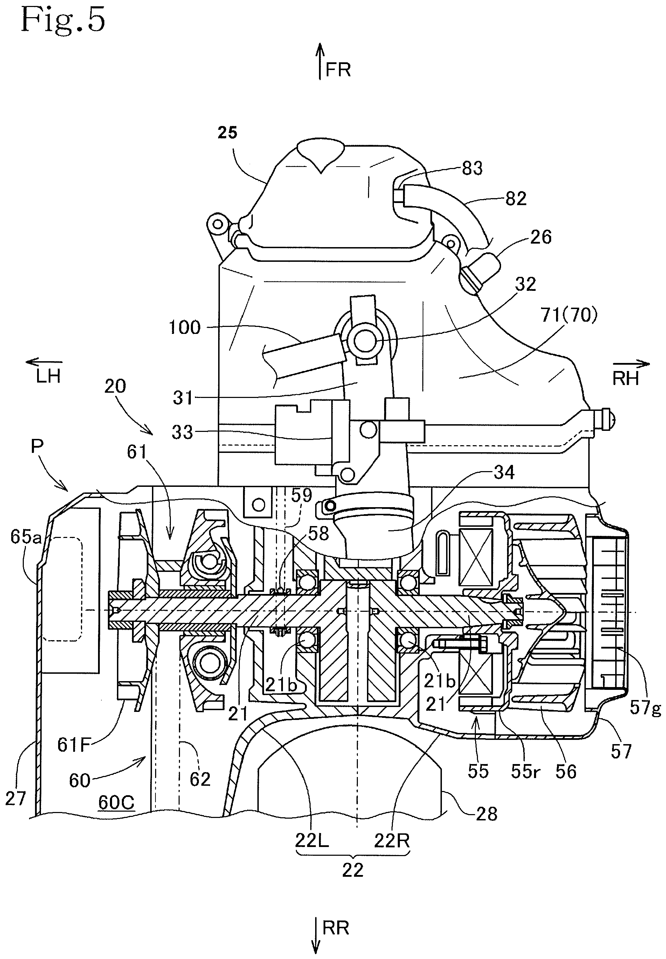

As illustrated in FIG. 5, the crankcase 22 is divided into left and right crankcase members, i.e., a left crankcase member 22L and a right crankcase member 22R. The crankshaft 21 that is oriented transversely is rotatably supported on the left crankcase member 22L and the right crankcase member 22R respectively by main bearings 21b.

The crankshaft 21 has a right shaft portion on which an alternate current (AC) generator 55 is mounted. The AC generator 55 includes an outer rotor 55r to which a centrifugal cooling fan 56 is integrally attached.

A fan cover 57 that covers a right side of the right crankcase member 22R houses the centrifugal cooling fan 56 therein.

The fan cover 57 has a grille 57g disposed as an ambient air inlet port in confronting relation to the centrifugal cooling fan 56.

As illustrated in FIG. 5, the left crankcase member 22L extends rearward so as to double as a transmission case. The transmission case or left crankcase member 22L has a left side covered with a transmission case cover 65, and houses therein a belt-type continuously variable transmission 60.

The crankshaft 21 has a left shaft portion on which there are mounted a drive chain sprocket 58 adjacent to the main bearing 21b and a drive pulley 61 of the belt-type continuously variable transmission 60 on a left shaft end portion thereof.

A cam chain 59 is trained around the drive chain sprocket 58 for transmitting power to a valve operating mechanism in the cylinder head 24.

As illustrated in FIG. 2, the belt-type continuously variable transmission 60 includes in its rear portion a speed reducer mechanism 64 having a speed reducer output shaft functioning as a rear axle 28a on which a rear wheel 28 is mounted.

A rear cushion 19 is interposed between an upper end of the rear portion of the transmission case 22L that includes the speed reducer mechanism 64 and the upper bent portions of the main pipes 4.

The speed reducer mechanism 64 has a speed reducer input shaft 64a on which a driven pulley 63 of the belt-type continuously variable transmission 60 is mounted. A belt 62 is trained around the drive pulley 61 mounted on the crankshaft 21 and the driven pulley 63 mounted on the speed reducer input shaft 64a for transmitting power from the internal combustion engine 20 through the belt 62 to the driven pulley 63, rotating the driven pulley 63. The rotation of the driven pulley 63 is transmitted through a centrifugal clutch 68 to the speed reducer input shaft 64a of the speed reducer mechanism 64. The speed reducer mechanism 64 transmits the rotation at a reduced speed to the rear wheel 28.

The drive pulley 61 includes a left pulley member having an ambient air intake fan 61F.

In the vehicle body front portion 1F, the head pipe 2 and the down tube 3 include vertically oriented portions covered with a front cover 1a and a leg shield 1b over front and rear sides thereof. In the floor portion 1C, the down tube 3 includes a longitudinally oriented portion covered with a floor cover 1c. In the vehicle body rear portion 1R, the main pipes 4 have left, right, and rear portions covered with a body cover 1d.

In the internal combustion engine 20 in the front portion of the power unit P, as illustrated in FIGS. 2 and 3, the cylinder block 23 projects forward from the crankcase 22, and the cylinder head 24 is stacked on and projects forward from the cylinder block 23. An intake pipe 31 extends upward from an upper surface of the cylinder head 24, and an exhaust pipe 51 extends downward from a lower surface of the cylinder head 24.

As illustrated in FIG. 3, an ignition plug 26 is inserted in a right side of the cylinder head 24 closely to a central portion of the cylinder head cover 25. An oxygen concentration sensor 27 is also inserted in the right side of the cylinder head 24 at a position where the exhaust pipe 51 extends from the cylinder head 24.

The intake pipe 31 extends from the upper surface of the cylinder head 24 in fluid communication with an intake port 30 defined in the cylinder head 24. The intake pipe 31 from the upper surface of the cylinder head 24 is bent rearward and coupled to a throttle body 33, and has a fuel injection valve 32 mounted thereon.

The throttle body 33 is coupled to a connecting tube 34 extending as an intake joint passageway tube from an air cleaner device 40 disposed on the crankcase 22. The air cleaner device 40, the connecting tube 34 extending from the air cleaner device 40, the throttle body 33 coupled to the connecting tube 34, the intake pipe 31 coupled to the throttle body 33, and the intake port 30 held in fluid communication with the intake pipe 31 jointly make up an intake system.

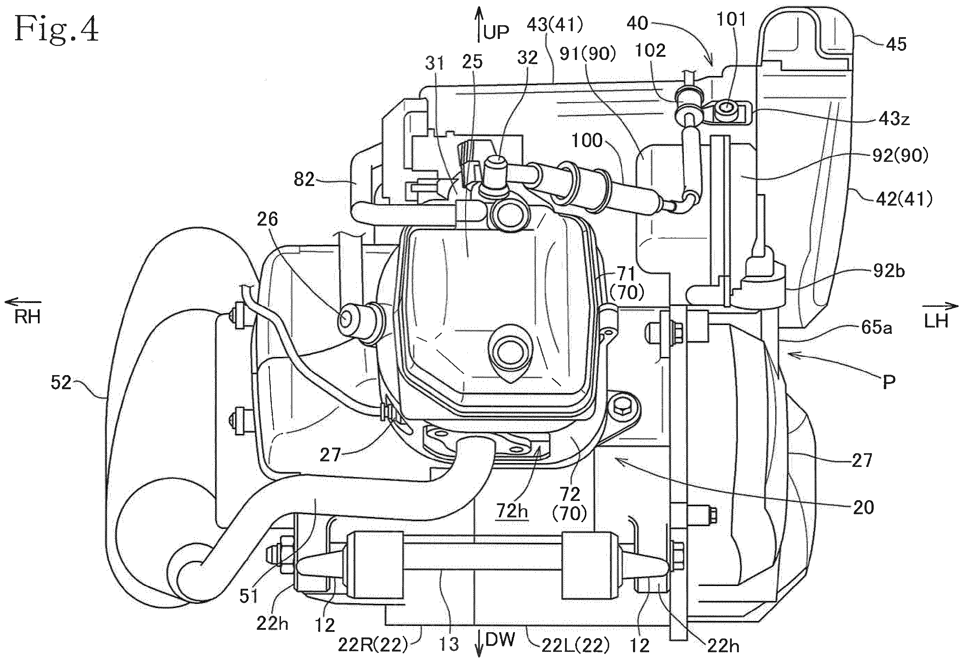

On the other hand, the exhaust pipe 51 extends downward from the lower surface of the cylinder head 24 in fluid communication with an exhaust port 50 defined in the cylinder head 24. As illustrated in FIGS. 3 and 4, the exhaust pipe 51 from the cylinder head 24 is bent obliquely rearward on the right side of the power unit P, is further bent obliquely rearward and downward, then extends rearward on the right side of a lower portion of the crankcase 22 (see FIGS. 1, 10, and 13), and is coupled to a muffler 52 that is disposed on the right side of the rear wheel 28.

As illustrated in FIGS. 2 through 4, the cylinder block 23 and the cylinder head 24 are surrounded by a shroud 70 that has a right side coupled to the fan cover 57.

The shroud 70 is divided into upper and lower half members, i.e., an upper shroud member 71 and a lower shroud member 72 that are combined together.

The upper shroud member 71 and the lower shroud member 72 that are combined together have a large opening defined therein that is open forward, through which the cylinder head cover 25 projects forward.

The intake pipe 31 extends upward through the upper shroud member 71, and the exhaust pipe 51 extends downward through an exhaust hole 72h defined in the lower shroud member 72 (see FIGS. 3 and 4.)

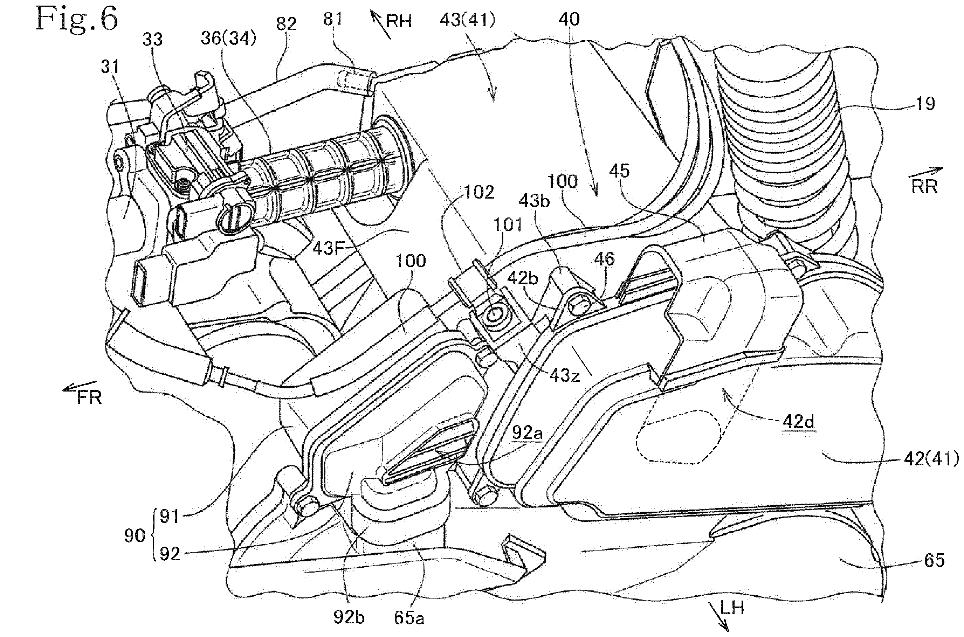

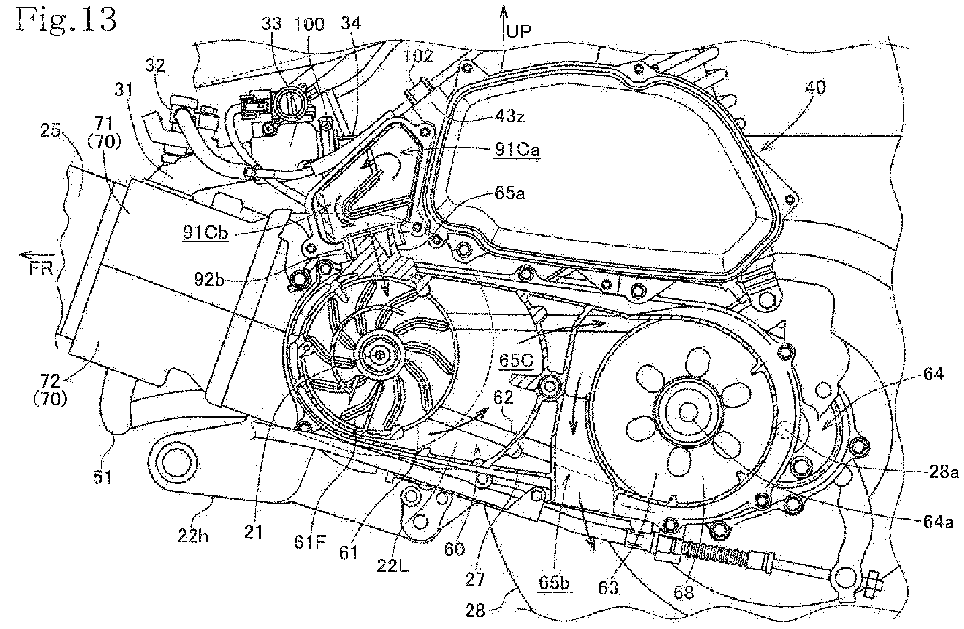

As illustrated in FIGS. 5 and 6, the air cleaner device 40 includes an air cleaner case 41 made up of a left non-purifying chamber case member 42 and a right purifying chamber case member 43 that are combined together. An air cleaner element 44 (see FIG. 2) is interposed between the non-purifying chamber case member 42 and the purifying chamber case member 43, compartmentalizing the space in the air cleaner case 41 into a non-purifying chamber Ca (FIG.13) in the non-purifying chamber case member 42 and a purifying chamber Cb in the purifying chamber case member 43.

The purifying chamber case member 43 has an opening that is open leftward which is covered with the non-purifying chamber case member 42 on the right side of the opening, with the air cleaner element 44 interposed between the purifying chamber case member 43 and the non-purifying chamber case member 42.

The non-purifying chamber case member 42 and the purifying chamber case member 43 have respective mounting brackets 42b and 43b held against each other and fastened together by bolts 46 (see FIG. 2).

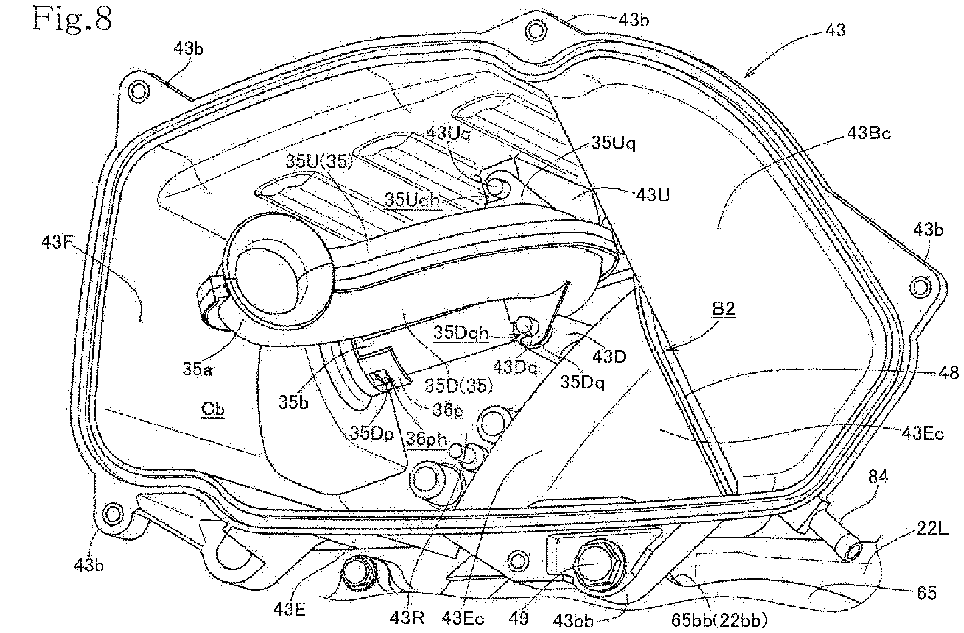

As illustrated in FIG. 8, the purifying chamber case member 43 projects to the right from the left opening thereof to define the purifying chamber Cb therein. The purifying chamber case member 43 has a right lower rear portion that is recessed inward as a curved bottom wall 43Ec extending clear of the rear wheel 28. The purifying chamber case member 43 also has a rear side wall 43B curved rearward near the left opening thereof into a curved rear wall 43Bc that leads to the left opening.

A left side portion of the purifying chamber case member 43 and the non-purifying chamber case member 42 are supported on the transmission case or left crankcase member 22L, which is elongated in forward and rearward directions, of the power unit P.

As illustrated in FIG. 8, a mounting bracket 43bb disposed on a lower edge of the purifying chamber case member 43 is fastened to mounting brackets 22bb and 65bb of the transmission case 22L and the transmission case cover 65 by a bolt 49, so that the air cleaner device 40 is fixedly supported on the transmission case 22L.

As illustrated in FIG. 6, an intake air duct 42d is disposed on an inner surface of a side wall of the non-purifying chamber case member 42. The intake air duct 42d has a lower end that is open into the non-purifying chamber Ca and an upper end that is open in an upper wall of the non-purifying chamber case member 42. The upper open end of the intake air duct 42d is covered with an air inlet duct 45 provided to protrude on the upper wall of the non-purifying chamber case member 42.

The air inlet duct 45 is open forward to introduce and lead vehicle running air toward the upper open end of the intake air duct 42d. Therefore, ambient air applied as ram air is introduced through the air inlet duct 45 into the non-purifying chamber Ca.

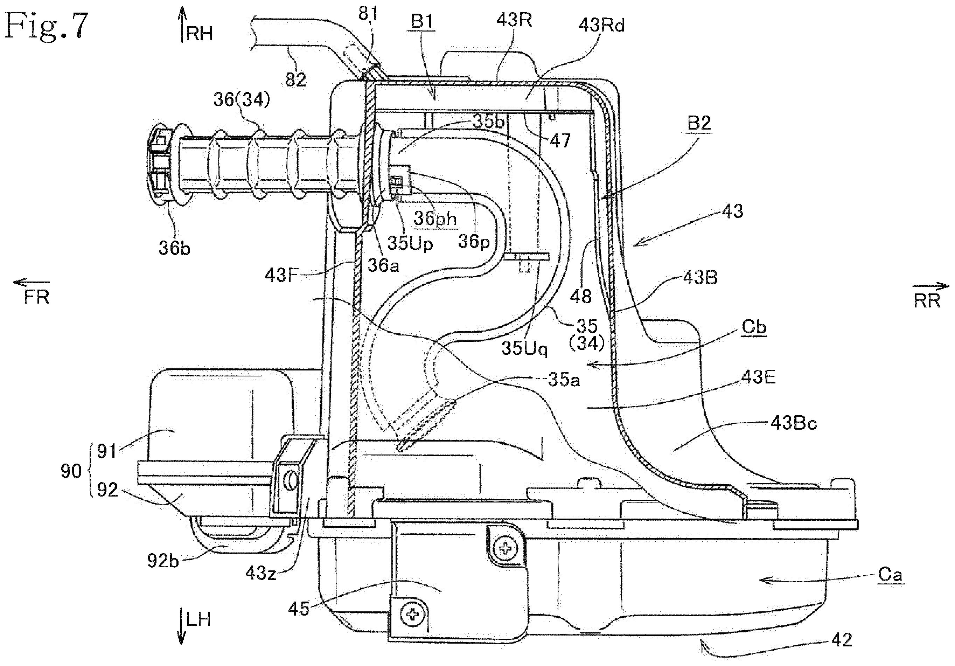

As illustrated in FIGS. 6 and 7, the connecting tube or intake joint passageway tube 34 interconnects the purifying chamber Cb in the air cleaner device 40 and the intake pipe 31. The connecting tube or intake joint passageway tube 34 is made up of an upstream inner connecting tube 35 disposed in the purifying chamber Cb and a downstream outer connecting tube 36 joined to the upstream inner connecting tube 35 and extending out of the purifying chamber case member 43 of the air cleaner case 41.

The outer connecting tube 36, which is a substantially straight elastically deformable tube made of rubber, has a downstream end or front end 36b coupled to the throttle body 33 and an upstream end or rear end 36a fitted in and supported on a front side wall 43F of the purifying chamber case member 43 near a right side thereof.

As illustrated in FIG. 7, the inner connecting tube 35 has two curved portions providing a desired intake passageway length and is disposed in the purifying chamber Cb, which is relatively small.

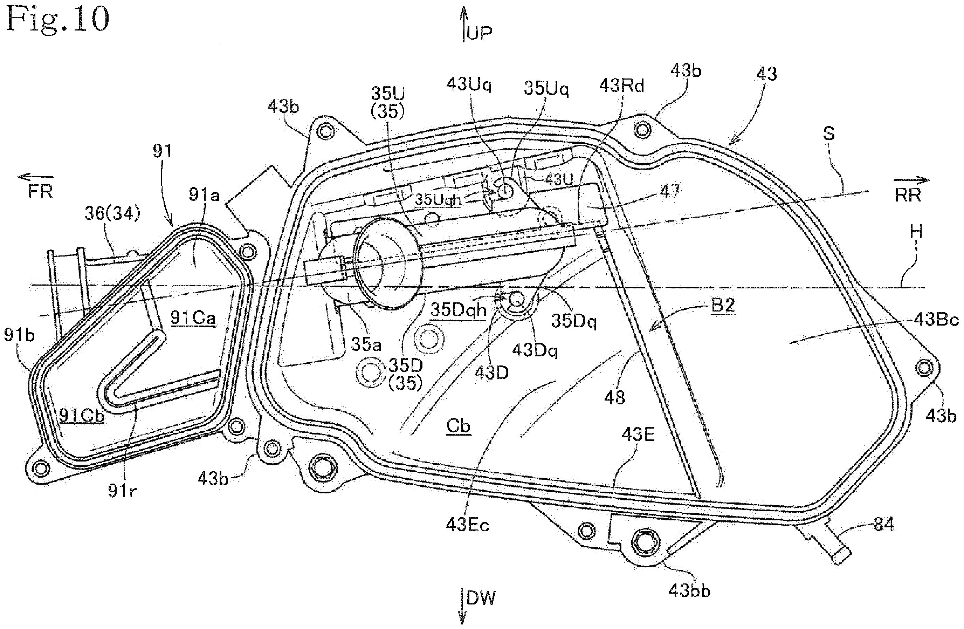

The inner connecting tube 35 has a central axis lying in a plane. The central axis can be defined as a succession of centers of cross sections thereof. If it is assumed that the plane including the central axis of the inner connecting tube 35 is referred to as a central axis plane S, then the two curved portions of the inner connecting tube 35 lie on the central axis plane S (see FIGS. 7 and 10).

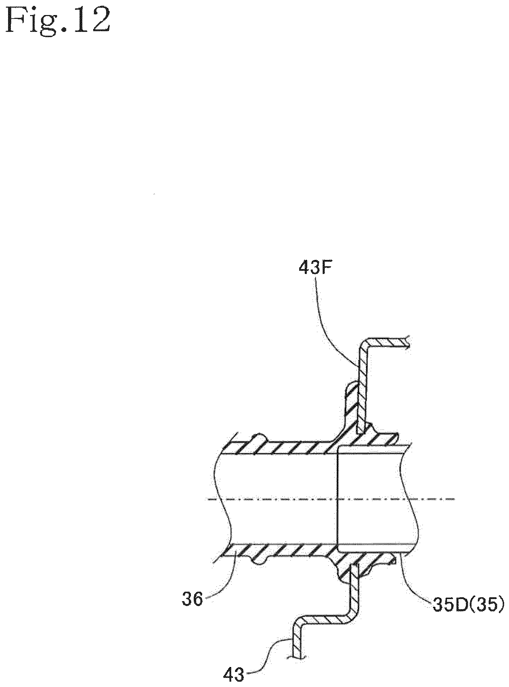

As illustrated in FIG. 12, the inner connecting tube 35 has a downstream end 35b fitted in and joined to the upstream end 36a of the outer connecting tube 36 that is inserted from the front side wall 43F of the purifying chamber case member 43 into the purifying chamber Cb (see FIGS. 7 and 8).

The inner connecting tube 35, which is made of a molded resin, is divided by the central axis plane S into two upper and lower tubes, i.e., an upper half tube 35U and a lower half tube 35D that are combined together (see FIG. 10).

The upper half tube 35U and the lower half tube 35D are integrally combined with each other by having respective mating surfaces vibration-welded to each other.

Alternatively, the mating surfaces of the upper half tube 35U and the lower half tube 35D may be joined to each other by ultrasonic vibrations or with an adhesive.

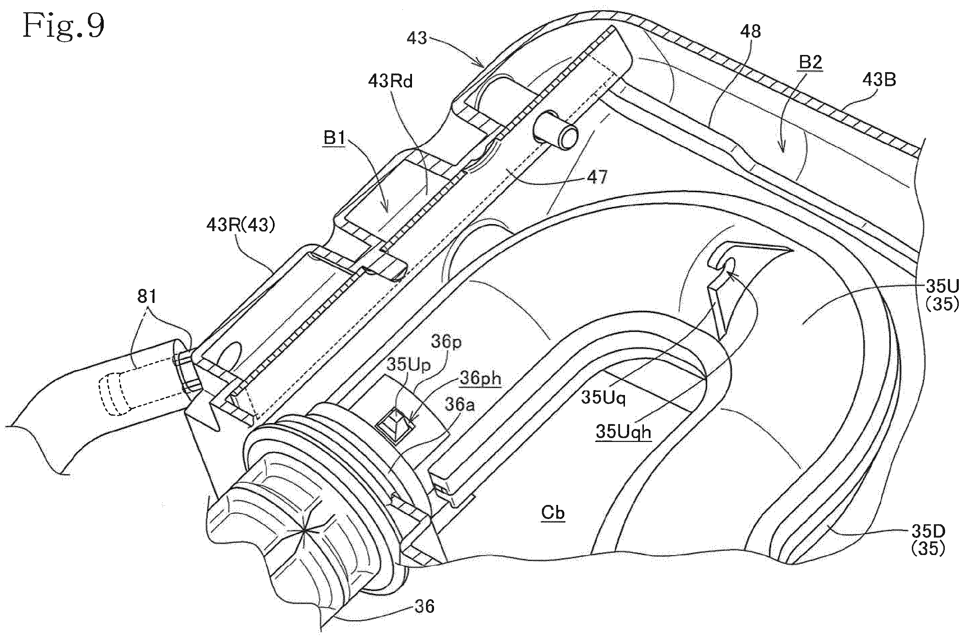

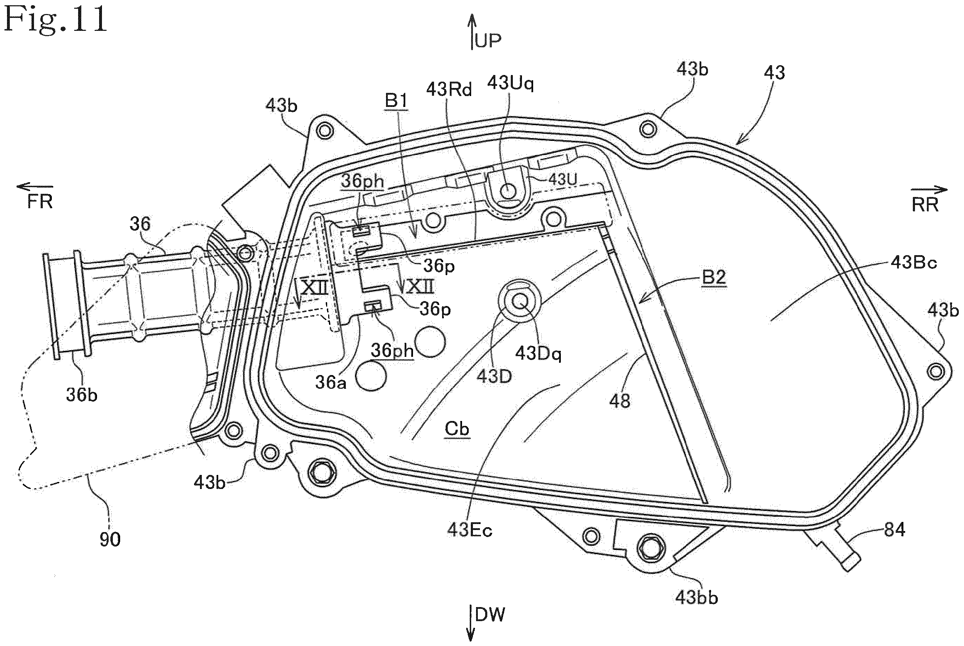

The upstream end 36a of the outer connecting tube 36 has a pair of upper and lower engaging tongues 36p (see FIG. 11) projecting rearward and having respective engaging holes 36ph formed therein. The downstream end 35b of the inner connecting tube 35 (see FIG. 9) has downstream engaging teeth 35Up and 35Dp. Specifically, a downstream engaging tooth 35Up projects upward from an outer circumferential surface of the upper half tube 35U, and a downstream engaging tooth 35Dp projects downward from an outer circumferential surface of the lower half tube 35D (see FIG. 8).

As illustrated in FIGS. 7 through 9, when the downstream end 35b of the inner connecting tube 35 is fitted into the upstream end 36a of the outer connecting tube 36, the downstream engaging tooth 35Up of the upper half tube 35U engages in the engaging hole 36ph in the upper engaging tongue 36p of the upstream end 36a of the outer connecting tube 36, and the downstream engaging tooth 35Dp of the lower half tube 35D engages in the engaging hole 36ph in the lower engaging tongue 36p of the outer connecting tube 36. Therefore, the inner connecting tube 35 can simply be coupled to the outer connecting tube 36.

As shown in FIG. 7, in the purifying chamber Cb, the inner connecting tube 35 extends rearward from the downstream end 35b that is connected to the outer connecting tube 36, is then bent leftward and extends forward in a U-shape, is further bent leftward, and extends obliquely rearward to an upstream end opening 35a.

An upstream engaging member 35Uq projects upward from an outer peripheral surface of the rear bent portion of the upper half tube 35U (see FIGS. 7 through 10), and an upstream engaging member 35Dq projects downward from an outer peripheral surface of the rear bent portion of the lower half tube 35D (see FIGS. 8 and 10).

The upstream engaging members 35Uq and 35Dq are disposed in a pair in substantially vertically symmetrical positions. The upstream engaging members 35Uq and 35Dq are in the form of vertical plates extending in leftward and rightward directions, and have respective engaging holes 35Uqh and 35Dqh formed in distal end portions thereof and having respective forward open cuts (see FIG. 8).

As illustrated in FIG. 8, a pair of upper and lower engaging protrusions 43U and 43D project leftward from predetermined upper and lower positions on an inner surface of a right side wall 43R of the right purifying chamber case member 43.

The paired upper and lower engaging protrusions 43U and 43D project respectively toward the upper and lower upstream engaging members 35Uq and 35Dq of the inner connecting tube 35 that is disposed at a predetermined position in the purifying chamber case member 43. The engaging protrusions 43U and 43D have on their distal ends respective engaging pins 43Uq and 43Dq engaging respectively in the engaging holes 35Uqh and 35Dqh in the upper and lower upstream engaging members 35Uq and 35Dq of the inner connecting tube 35. The inner connecting tube 35 is thus disposed at the predetermined position in the purifying chamber case member 43, with the upper half tube 35U and the lower half tube 35D supported by the purifying chamber case member 43.

For installing the inner connecting tube 35 in the purifying chamber case member 43, the inner connecting tube 35 is placed into the purifying chamber case member 43 while the downstream end 35b of the inner connecting tube 35 is being oriented forward, and the downstream end 35b of the inner connecting tube 35 is positioned rearward of and in facing relation to the upstream end 36a of the outer connecting tube 36 coaxially therewith. While the engaging holes 35Uqh and 35Dqh in the upper and lower upstream engaging members 35Uq and 35Dq are being held in facing relation to the respective engaging pins 43Uq and 43Dq of the engaging protrusions 43U and 43D, the inner connecting tube 35 is displaced forward until the downstream end 35b of the inner connecting tube 35 is fitted into the upstream end 36a of the outer connecting tube 36 and until the upper and lower downstream engaging teeth 35Up and 35Dp of the inner connecting tube 35 engage the respective upper and lower engaging tongues 36p of the outer connecting tube 36, whereupon the inner connecting tube 35 is coupled to the outer connecting tube 36. At the same time, the engaging pins 43Uq and 43Dq on the distal ends of the engaging protrusions 43U and 43D of the purifying chamber case member 43 enter, via the forwardly opening cuts, the engaging holes 35Uqh and 35Dqh in the upper and lower upstream engaging members 35Uq and 35Dq of the inner connecting tube 35 and engage therein, whereupon the inner connecting tube 35 is supported by the purifying chamber case member 43.

Therefore, the inner connecting tube 35 can simply be installed in the purifying chamber case member 43 with high working efficiency.

As illustrated in FIG. 10, the central axis plane S including the central axis of the inner connecting tube 35 is inclined forward and downward from a horizontal plane H.

The central axis of the outer connecting tube 36 is also inclined forward and downward from the horizontal plane H, and generally lies on the inclined central axis plane S of the inner connecting tube 35.

As illustrated in FIG. 7, the rear side wall 43B, except its left side portion, of the purifying chamber case member 43 extends parallel to the front side wall 43F and faces the front side wall 43F in the forward and rearward directions. The left side portion of the rear side wall 43B serves as the curved rear wall 43Bc that is curved rearward progressively toward the mating surface that mates with the left non-purifying chamber case member 42.

As illustrated in FIG. 8, the purifying chamber case member 43 has a bottom wall 43E whose right hand portion serves as the curved bottom wall 43Ec that is recessed clear of the rear wheel 28. The curved bottom wall 43Ec is curved downward progressively to the left.

As shown in FIGS. 9 and 11, the right side wall 43R of the right purifying chamber case member 43, except its left side portion, has a step 43Rd projecting leftward and inward and extending in the forward and rearward directions.

The step 43Rd has an upper surface lying substantially parallel to the central axis plane S and inclined forward and downward (see FIG. 10).

As illustrated in FIGS. 7 and 9, the upper surface of the step 43Rd extends rearward from the front side wall 43F to a position short of the rear side wall 43B. The step 43Rd has a rear end spaced from the rear side wall 43B.

As shown in FIGS. 7 and 9, a partition side plate 47 that is elongate in the forward and rearward directions has a lower edge portion fixed to an inner side surface of the step 43Rd, defining a first breather passage B1 above the step 43Rd between the partition side plate 47 and the right side wall 43R which adjoin the upper surface of the step 43Rd. The first breather passage B1 is a channel-shaped passage of U-shaped cross section that is open upward and extends in the forward and rearward directions.

The partition side plate 47 has a front end extending substantially up to the front side wall 43F and a rear end disposed in substantially the same position as the rear end of the step 43Rd.

As illustrated in FIGS. 7 and 9, a partition rib 48 is erected on the curved bottom wall 43Ec of the bottom wall 43E of the purifying chamber case member 43. The partition rib 48 is spaced a distance from and extends substantially parallel to an inner surface of the rear side wall 43B.

The partition rib 48 has a right end contiguous to the rear end of the step 43Rd of the right side wall 43R (see FIG. 9) and extends leftward from the right end along the inner surface of the rear side wall 43B. The partition rib 48 is then curved downward along the curved bottom wall 43Ec and extends nearly to the lowest portion of the bottom wall 43E (see FIG. 10), defining a second breather passage B2 between the partition rib 48 and the rear side wall 43B.

As illustrated in FIG. 9, a connection tube 81 held in fluid communication with the first breather passage B1 projects from a front portion of the side wall, which partly defines the first breather passage B1, of the right side wall 43R of the purifying chamber case member 43.

A breather tube 82 (see FIG. 5) whose rear end is connected to the connection tube 81 extends forward and has a front end connected to a connection tube 83 that projects from a breather chamber defined in the cylinder head cover 25.

As illustrated in FIGS. 8 and 10, a drain tube 84 projects from a rear portion of the bottom wall 43E of the purifying chamber case member 43, which rear portion is inclined rearward and downward on a left side of the curved bottom wall 43Ec.

Therefore, blow-by gases containing unburned fuel components from within the crankcase 22 are drawn into the breather chamber in the cylinder head cover 25, and delivered through the breather tube 82 into the first breather passage B1 in the purifying chamber Cb of the air cleaner device 40.

The blow-by gases introduced into the first breather passage B1 in the purifying chamber Cb are then delivered together with intake air again into the combustion chamber in the internal combustion engine 20 for combustion.

When the blow-by gases are introduced into the first breather passage B1, the blow-by gases are separated into a gas component and a liquid component by the first breather passage 81 that is inclined rearward and upward. The separated liquid component, such as lubricating oil, etc., contained in the blow-by gases is accumulated in the first breather passage B1, and then flows from a rear end of the first breather passage B1 down into the second breather passage B2. The liquid component flows down by being guided by the second breather passage B2 that is curved downward along the curved bottom wall 43Ec, then reaches the bottom case surface of the bottom wall 43E that is inclined rearward and downward on a left side of the purifying chamber case member 43, and flows rearward into the drain tube 84 on the rear portion of the bottom wall 43E. When a drain cap is removed from the drain tube 84, the liquid component accumulated in the drain tube 84 is discharged therefrom.

As illustrated in FIG. 2, an air guide tube 65a projects upward from a front upper portion of the transmission case cover 65 in which the drive pulley 61 of the belt-type continuously variable transmission 60 is positioned.

The air guide tube 65a has an upper end that is open upward and a lower end that is open into the transmission case cover 65.

An ambient air introducing device 90 is connected to the upper open end of the air guide tube 65a.

As illustrated in FIG. 6, the ambient air introducing device 90 includes an introduction case 91 and an introduction case cover 92 that covers a left opening of the introduction case 91.

As illustrated in FIGS. 10 and 13, the introduction case 91 is positioned forward of a left side of the curved bottom wall 43Ec of the purifying chamber case member 43 of the air cleaner device 40, and is joined and integrally fixed to a front edge of the purifying chamber case member 43.

The introduction case 91 has a bottom wall 91a surrounded by a peripheral wall 91b. The left opening of the introduction case 91 is capped by the introduction case cover 92.

The inside of the introduction case 91 is divided into an ambient air inlet space 91Ca and an air guide path 91Cb by an air guide rib 91r erected on the bottom wall 91a and bent in a V-shape (see FIG. 10).

As illustrated in FIG. 10, the ambient air inlet space 91Ca is positioned rearward of the air guide rib 91r that is open generally rearward in a V-shape in the introduction case 91. The air guide path 91Cb is defined along an outer side of the V-shaped air guide rib 91r. The air guide path 91Cb has an upstream end or upper end held in fluid communication with the ambient air inlet space 91Ca and a downstream end closed by the peripheral wall 91b but held in fluid communication with the side of the introduction case cover 92.

The introduction case cover 92 that covers the left opening of the introduction case 91 includes an ambient air inlet port 92a defined in a side wall thereof. The ambient air inlet port 92a faces the ambient air inlet space 91Ca in the introduction case 91.

The introduction case cover 92 has a lower portion formed into a connection tube 92b connected to the upper end of the air guide tube 65a on the transmission case cover 65, so that the connection tube 92b is connected to the air guide tube 65a (see FIGS. 2 and 6).

As illustrated in FIG. 13, when the ambient air intake fan 61F on the drive pulley 61 that rotates with the crankshaft 21 is rotated, the ambient air intake fan 61F introduces cooling air from the ambient air inlet port 92a of the ambient air introducing device 90 into the ambient air inlet space 91Ca. As indicated by the solid-line arrows, the cooling air flows through the air guide path 91Cb, which is of a labyrinth structure, and then through the air guide tube 65a on the transmission case cover 65, from which the cooling air is introduced into a belt-type continuously variable transmission chamber 60C in the transmission case cover 65 (see FIG. 5), as indicated by the broken-line arrow.

As indicated by the flow of cooling air indicated by the solid-line arrows in FIG. 13, the cooling air that is introduced to a side of the ambient air intake fan 61F in the belt-type continuously variable transmission chamber 60C is caused to flow obliquely rearward and upward from a lower portion of the ambient air intake fan 61F by the ambient air intake fan 61F that rotates counterclockwise in FIG. 13, and flow in an upper portion of the belt-type continuously variable transmission chamber 60C toward the driven pulley 63 and the centrifugal clutch 68 in a rear portion thereof.

The transmission case cover 65 includes a vertically oriented air discharge duct 65b extending along an inner surface forward of the centrifugal clutch 68. The air discharge duct 65b has an upper end that is open into the belt-type continuously variable transmission chamber 60C and a lower end that is open downward out of the transmission case cover 65. Therefore, the cooling air flows through the air discharge duct 65b and is discharged downward from a lower surface of the transmission case cover 65.

The fuel injection valve 32 mounted on the intake pipe 31 that extends upward from the cylinder head 24 of the internal combustion engine 20 is supplied with a fuel from a fuel hose 100. The fuel hose 100 extends downward from the fuel tank 6 supported on rear portions of the main pipes 4. As illustrated in FIGS. 2 and 6, the fuel hose 100 is positioned on a left side over the purifying chamber case member 43 of the air cleaner device 40 and extends forward. The fuel hose 100 extends further forward over the ambient air introducing device 90 to the fuel injection valve 32.

As illustrated in FIG. 6, the fuel hose 100 has a portion held by a holder 102 mounted by a bolt 101 on a support boss 43z that projects from a front left portion of the purifying chamber case member 43 of the air cleaner device 40.

Consequently, the fuel hose 100 that extends in the forward and rearward directions from the fuel tank 6 to the fuel injection valve 32 is held at one location in its substantially central portion on the purifying chamber case member 43 of the air cleaner device 40 by the holder 102. The fuel hose 100 is thus effectively prevented from wobbling.

The intake structure for the vehicle-mounted internal combustion engine according to the embodiment of the present invention as described in detail above offers the following advantages:
As illustrated in FIGS. 8 through 10, the inner connecting tube 35 that is housed in the small-volume purifying chamber Cb in the air cleaner case 41 and has two bent portions for an increased intake passageway length is made up of the upper half tube 35U and the lower half tube 35D that are combined together which are divided as two half joint passageway tubes along the central axis plane S as a plane including the central axis of the inner connecting tube 35. Therefore, the upper half tube 35U and the lower half tube 35D can easily be formed, and the inner connecting tube 35 can be constructed by combining together the upper half tube 35U and the lower half tube 35D thus formed. Consequently, the inner connecting tube 35 can easily be manufactured.

As the inner connecting tube 35 is made of a molded resin, each of the pair of the upper half tube 35U and the lower half tube 35D can easily be formed. Since the inner connecting tube 35 that is more rigid than rubber or the like can be constructed by combining together the upper half tube 35U and the lower half tube 35D thus formed, the inner connecting tube 35 is prevented from being dented or made deformed radially inward due to air intake, resulting in increased drivability.

As illustrated in FIG. 10, inasmuch as the continuous intake passageway that is provided by the inner connecting tube 35 in the purifying chamber Cb in the air cleaner case 41 and the outer connecting tube 36 extending forward from the air cleaner case 41 is disposed on substantially the same inclined plane that is inclined forward and downward, which is aligned with the central axis plane S in FIG. 10, intake air that passes through the intake passageway flows smoothly with minimized resistance for an increased intake efficiency. The term "substantially the same" in the above phrase "substantially the same inclined plane that is inclined forward and downward" means that each of the inner connecting tube 35 and the outer connecting tube 36 lies on the same plane to the extent that they do not adversely affect the intake efficiency. Inclined planes on which the inner connecting tube 35 and the outer connecting tube 36 lie may not necessarily be completely the same plane, but may be inclined to each other by an angle of 6 degrees, for example.

As illustrated in FIG. 10, providing the inner connecting tube 35 has a plurality of bent portions on the central axis plane S including the central axis and is divided into two upper and lower tubes by the central axis plane S, the upper half tubes 35U and the lower half tube 35D thus divided can easily be molded to shape.

As illustrated in FIGS. 8 through 10, the inner connecting tube 35 has the downstream end 35b fitted in and joined to the upstream end 36a of the outer connecting tube 36 that is inserted from the front side wall 43F of the purifying chamber case member 43 into the purifying chamber Cb, and the engaging pins 43Uq and 43Dq on the distal ends of the upper and lower engaging protrusions 43U and 43D in the purifying chamber case member 43 engage respectively in the engaging holes 35Uqh and 35Dqh in the upper and lower engaging members 35Uq and 35Dq of the inner connecting tube 35, so that the upper half tube 35U and the lower half tube 35D are supported by the purifying chamber case member 43. Therefore, the upper half tube 35U and the lower half tube 35D are effectively supported by the air cleaner case 41.

As shown in FIG. 11, the breather passage in the purifying chamber Cb in the air cleaner case 41 is made up of the first breather passage B1 whose front portion is held in fluid communication with the breather tube 82 and which extends rearward and upward, and the second breather passage B2 that is contiguous to the rear end of the first breather passage B1, is compartmentalized by the partition rib 48, and extends downward to the case bottom surface on which the drain tube 84 is disposed. When blow-by gases are drawn through the breather tube 82 into the purifying chamber Cb in the air cleaner case 41, the blow-by gases initially enter the first breather passage B1 and are then separated into a gas component and a liquid component by the first breather passage B1 that is inclined rearward and upward. The gas component is delivered together with intake air again into the combustion chamber in the internal combustion engine 20 for combustion. The separated liquid component, such as lubricating oil, etc., is accumulated in the first breather passage B1, and then flows from the rear end of the first breather passage B1 down into the second breather passage B2. The liquid component flows down the second breather passage B2 that is compartmentalized by the partition rib 48 and extends downward, then reaches the bottom case surface of the bottom wall 43E that is inclined rearward and downward on the left side of the purifying chamber case member 43, and flows rearward on the case bottom surface, so that the liquid component can easily be led to the drain tube 84 that serves as a drain port.

As illustrated in FIG. 9, the first breather passage B1 is formed as a channel-shaped passage on the step 43Rd by the partition side plate 47 that is elongate in the forward and rearward directions and attached to the step 43Rd that projects inward from the right side wall 43R, which faces the partition side plate 47 in the transverse direction or vehicle widthwise direction. Therefore, the first breather passage B1 which is made up of a small number of parts and extends obliquely rearward and upward can simply be installed, with a small number of parts, in the purifying chamber Cb in the air cleaner case 41.

While the intake structure of the vehicle-mounted internal combustion engine according to the embodiment of the present invention has been described above, the present invention is not limited to the above embodiment, but various changes and modifications may be made therein without departing from the scope of the claims.

For example, in the present embodiment, the inner connecting tube 35 is divided into the two tubes, i.e., the upper half tube 35U and the lower half tube 35D, along the central axis plane S as a plane including the central axis of the inner connecting tube 35. However, the inner connecting tube may be divided into two tubes by a curved plane including the central axis.

The vehicle according to the present invention is not limited to the scooter-type motorcycle 1 in the embodiment described, but may be any of various saddle-type vehicles, such as three-wheeled and four-wheeled buggies, etc. insofar as it is a vehicle containing requirements called for in the claims.

### [Reference Signs List]

1···Scooter-type motorcycle, 2···Head pipe, 3···Down tube, 4···Main pipe, 5···Storage box, 6···Fuel tank, 7···Rider's seat, 8···Handle, 9···Front fork, 10···Front wheel, 11···Support bracket, 12···Link, 13···Pivot shaft, 19···Rear cushion,
P···Power unit, 20···Internal combustion engine, 21···Crankshaft, 22···Crankcase, 22L···Left crankcase member or transmission case, 22R···Right crankcase member, 22h···Engine hanger, 23···Cylinder block, 24···Cylinder head, 25···Cylinder head cover, 26···Ignition plug, 27···Oxygen concentration sensor, 28···Rear wheel,
30···Intake port, 31···Intake pipe, 32···Fuel injection valve, 33···Throttle body, 34···Connecting tube,
35···Inner connecting tube, 35U···Upper half tube, 35Up···Engaging tooth, 35Uq···Engaging member, 35Uqh···Engaging hole, 35D···Lower half tube, 35Dp···Downstream engaging tooth, 35Dq···Upstream engaging member, 35Dqh···Engaging hole,
36···Outer connecting tube, 36p···Engaging tongue, 36ph···Engaging hole,
40···Air cleaner device, 41···Air cleaner case,
42···Non-purifying chamber case member, Ca···Non-purifying chamber, 42d···Intake air duct,
43···Purifying chamber case member, 43F···Front side wall, 43B···Rear side wall, 43Bc···Curved rear wall, 43R···Right side wall, 43E···Bottom wall, 43Ec···Curved bottom wall, Cb···Purifying chamber, 43U, 43D···Engaging protrusion, 43Uq, 43Dq···Engaging pin, B1···First breather passage, B2···Second breather passage,
44···Air cleaner element, 45···Air inlet duct, 46···Bolt, 47···Partition side plate, 48···Partition rib,
50···Exhaust port, 51···Exhaust pipe, 52···Muffler, 55···AC generator, 56···Centrifugal cooling fan, 57···Fan cover, 58···Drive chain sprocket, 59···Cam chain,
60···Belt-type continuously variable transmission, 60C···Belt-type continuously variable transmission chamber, 61···Drive pulley, 61F···Ambient air intake fan, 62···Belt, 63···Driven pulley, 64···Speed reducer mechanism, 64a···Speed reducer input shaft, 65···Transmission case cover, 65a···Air guide tube, 65b···Air discharge duct, 68···Centrifugal clutch,
70w···Shroud, 71···Upper shroud member, 72···Lower shroud member,
80···, 81···Connection tube, 82···Breather tube, 83···Connection tube, 84···Drain tube,
90···Ambient air introducing device, 91···Introduction case, 91Ca···Ambient air inlet space,
91Cb···Air guide path, 92···Introduction case cover, 92a···Ambient air inlet port,
100···Fuel hose, 101···Bolt, 102···Holder.

## Claims

1. An intake structure for a vehicle-mounted internal combustion engine, including an air cleaner device (40) having an air cleaner case (41) compartmentalized by an air cleaner element (44) into a non-purifying chamber (Ca) and a purifying chamber (Cb);
wherein an intake pipe (31) extending from a cylinder head (24) of the internal combustion engine (20) mounted on a vehicle and the purifying chamber (Cb) in the air cleaner case (41) are held in fluid communication with each other by an intake joint passageway tube (34); wherein:
the intake joint passageway tube (34) is made up of an inner intake joint passageway tube (35) disposed in the purifying chamber (Cb) in the air cleaner case (41) and an outer intake joint passageway tube (36) contiguous to the inner intake joint passageway tube (35); and
**characterised in that**:
the inner intake joint passageway tube (35) is divided into two half joint passageway tubes (35U, 35D) combined together, along a plane including substantially a central axis of the inner intake joint passageway tube (35); and **in that**:
the outer intake joint passageway tube (36) extends out of the air cleaner case (41);
the inner intake joint passageway tube (35) has a plurality of bent portions on a central axis plane (S) including the central axis of the inner intake joint passageway tube (35), and is made up of a pair of an upper half joint passageway tube (35U) and a lower half joint passageway tube (35D) combined together, which are divided by the central axis plane (S);
the inner intake joint passageway tube (35) has a downstream end (35b) fitted in an upstream end (36a) of the outer intake joint passageway tube (36) which is fitted in the air cleaner case (41);
the inner intake joint passageway tube (35) has upper and lower downstream engaging teeth (35Up, 35Dp) engaging and coupled to upper and lower engaging tongues (36p, 36p) provided on the outer intake joint passageway tube (36); and
the air cleaner case (41) is provided with engaging protrusions (43U, 43D) having engaging pins (43Uq, 43Dq) on distal ends thereof, the engaging pins (43Uq, 43Dq) engaging in forwardly open engaging holes (35Uqh, 35Dqh) defined in upper and lower upstream engaging members (35Uq, 35Dq) on the inner intake joint passageway tube (35), thereby supporting the inner intake joint passageway tube (35).

2. An intake structure for a vehicle-mounted internal combustion engine as claimed in claim 1, wherein the inner intake joint passageway tube (35) is made of a molded resin.

3. An intake structure for a vehicle-mounted internal combustion engine as claimed in claim 1 or 2, wherein:
the outer intake joint passageway tube (36) extends forward from the air cleaner case (41) and is held in fluid communication with the intake pipe (31) through a throttle body (33); and
a central axis of the outer intake joint passageway tube (36) and the central axis of the inner intake joint passageway tube (35) that is contiguous to the outer intake joint passageway tube (36) lie in substantially the same inclined plane inclined forward and downward from a horizontal plane (H).

4. An intake structure for a vehicle-mounted internal combustion engine as claimed in any one of claims 1 through 3, wherein:
the inner intake joint passageway tube (35) is coupled to an end of the outer intake joint passageway tube (36) fitted in and supported by the air cleaner case (41); and
each of the paired half joint passageway tubes (35U, 35D) of the inner intake joint passageway tube (35) is supported by the air cleaner case (41).

5. An intake structure for a vehicle-mounted internal combustion engine as claimed in any one of claims 1 through 4, wherein:
a breather passage is defined in the purifying chamber (Cb) in the air cleaner case (41); and
the breather passage is made up of a first breather passage (B1) having a front portion held in fluid communication with a breather tube (82) disposed outward of the air cleaner case (41) and extending obliquely rearward and upward, and a second breather passage (B2) contiguous to a rear end of the first breather passage (B1), the second breather passage (B2) being compartmentalized by a rib (48) and extending downward to a case bottom surface on which a drain tube (84) is disposed.

6. An intake structure for a vehicle-mounted internal combustion engine as claimed in claim 5, wherein the first breather passage (B1) is defined as a channel-shaped passage on a step (43Rd) projecting inward from a vehicle-widthwise case side wall (43R) of the air cleaner case (41), by a side plate (47) elongated in forward and rearward directions and attached to the step (43Rd).

## Patentansprüche

1. Luftansaugstruktur für einen an einem Fahrzeug montierten Verbrennungsmotor, beinhaltend eine Luftreinigungsvorrichtung (40) mit einem Luftreinigergehäuse (41), das durch ein Luftreinigerelement (44) in eine Nicht-Aufreinigungskammer (Ca) und eine Aufreinigungskammer (Cb) unterteilt ist;
wobei ein Luftansaugrohr (31), das sich von einem Zylinderkopf (24) des Verbrennungsmotors (20) erstreckt, der an einem Fahrzeug montiert ist, und die Aufreinigungskammer (Cb) in dem Luftreinigergehäuse (41) durch ein Luftansaugverbindungsdurchlassrohr (34) miteinander in strömungstechnischer Verbindung gehalten werden;
wobei:
das Luftansaugverbindungsdurchlassrohr (34) aus einem inneren Luftansaugverbindungsdurchlassrohr (35), das in der Aufreinigungskammer (Cb) in dem Luftreinigergehäuse (41) angeordnet ist, und einem äußeren Luftansaugverbindungsdurchlassrohr (36), das fortlaufend zu dem inneren Luftansaugverbindungsdurchlassrohr (35) ist, hergestellt ist; und
**dadurch gekennzeichnet, dass**:
das innere Luftansaugverbindungsdurchlassrohr (35) in zwei halbe Verbindungsdurchlassrohre (35U, 35D), die miteinander kombiniert sind, entlang einer Ebene geteilt ist, die im Wesentlichen eine Mittelachse des inneren Luftansaugverbindungsdurchlassrohrs (35) beinhaltet; und dass:
sich das äußere Luftansaugverbindungsdurchlassrohr (36) aus dem Luftreinigergehäuse (41) nach außen erstreckt;
das innere Luftansaugverbindungsdurchlassrohr (35) eine Vielzahl von gebogenen Abschnitten auf einer Mittelachsenebene (S) aufweist, die die Mittelachse des inneren Luftansaugverbindungsdurchlassrohrs (35) beinhaltet, und aus einem Paar eines oberen halben Verbindungsdurchlassrohrs (35U) und eines unteren halben Verbindungsdurchlassrohrs (35D), die miteinander kombiniert sind, die durch die Mittelachsenebene (S) geteilt sind, hergestellt ist;
das innere Luftansaugverbindungsdurchlassrohr (35) ein stromabwärts liegendes Ende (35b) aufweist, das in einem stromaufwärts liegenden Ende (36a) des äußeren Luftansaugverbindungsdurchlassrohrs (36) eingesetzt ist, das in dem Luftreinigergehäuse (41) eingesetzt ist;
das innere Luftansaugverbindungsdurchlassrohr (35) obere und untere, stromabwärts liegende Eingriffszähne (35Up, 35Dp) aufweist, die in obere und untere Eingriffszungen (36p, 36p) eingreifen und an diese gekoppelt sind, die an dem äußeren Luftansaugverbindungsdurchlassrohr (36) bereitgestellt sind; und
das Luftreinigergehäuse (41) mit Eingriffsfortsätzen (43U, 43D) bereitgestellt ist, die Eingriffsstifte (43Uq, 43Dq) an ihren distalen Enden aufweisen, wobei die Eingriffsstifte (43Uq, 43Dq) in nach vorne offene Eingriffslöcher (35Uqh, 35Dqh) eingreifen, die in oberen und unteren, stromaufwärts liegenden Eingriffselementen (35Uq, 35Dq) des inneren Luftansaugverbindungsdurchlassrohrs (35) definiert sind, wodurch das innere Luftansaugverbindungsdurchlassrohr (35) gestützt wird.

2. Luftansaugstruktur für einen an einem Fahrzeug montierten Verbrennungsmotor nach Anspruch 1, wobei das innere Luftansaugverbindungsdurchlassrohr (35) aus einem geformten Harz hergestellt ist.

3. Luftansaugstruktur für einen an einem Fahrzeug montierten Verbrennungsmotor nach Anspruch 1 oder 2, wobei:
das äußere Luftansaugverbindungsdurchlassrohr (36) sich von dem Luftreinigergehäuse (41) nach vorne erstreckt und mit dem Luftansaugrohr (31) durch einen Drosselkörper (33) in strömungstechnischer Verbindung gehalten wird; und
eine Mittelachse des äußeren Luftansaugverbindungsdurchlassrohrs (36) und die Mittelachse des inneren Luftansaugverbindungsdurchlassrohrs (35), das fortlaufend zu dem äußeren Luftansaugverbindungsdurchlassrohr (36) ist, in im Wesentlichen derselben geneigten Ebene liegen, die von einer horizontalen Ebene (H) nach vorne und nach unten geneigt ist.

4. Luftansaugstruktur für einen an einem Fahrzeug montierten Verbrennungsmotor nach einem der Ansprüche 1 bis 3, wobei:
das innere Luftansaugverbindungsdurchlassrohr (35) an ein Ende des äußeren Luftansaugverbindungsdurchlassrohrs (36) gekoppelt ist, das in das Luftreinigergehäuse (41) eingesetzt ist und von diesem gestützt wird; und
jedes der paarweisen halben Verbindungsdurchlassrohre (35U, 35D) des inneren Luftansaugverbindungsdurchlassrohrs (35) von dem Luftreinigergehäuse (41) gestützt wird.

5. Luftansaugstruktur für einen an einem Fahrzeug montierten Verbrennungsmotor nach einem der Ansprüche 1 bis 4, wobei:
ein Entlüftungsdurchlass in der Aufreinigungskammer (Cb) in dem Luftreinigergehäuse (41) definiert ist; und
der Entlüftungsdurchlass aus einem ersten Entlüftungsdurchlass (B1) mit einem Vorderabschnitt, der mit einem Entlüftungsrohr (82) in strömungstechnischer Verbindung gehalten wird, das außerhalb des Luftreinigergehäuses (41) angeordnet ist, und sich schräg nach hinten und nach oben erstreckt, und einem zweiten Entlüftungsdurchlass (B2), der fortlaufend zu einem hinteren Ende des ersten Entlüftungsdurchlasses (B1) ist, hergestellt ist, wobei der zweite Entlüftungsdurchlass (B2) durch eine Rippe (48) unterteilt ist und sich zu einer Gehäusebodenfläche nach unten erstreckt, auf der ein Ableitungsrohr (84) angeordnet ist.

6. Luftansaugstruktur für einen an einem Fahrzeug montierten Verbrennungsmotor nach Anspruch 5, wobei der erste Entlüftungsdurchlass (B1) als ein kanalförmiger Durchlass auf einer Stufe (43Rd), die von einer Gehäuseseitenwand (43R) in Fahrzeugbreite des Luftreinigergehäuses (41) nach innen ragt, durch eine Seitenplatte (47), die in Vorwärts- und Rückwärtsrichtung länglich ist und an der Stufe (43Rd) befestigt ist, definiert ist.

## Revendications

1. Structure d'admission pour un moteur à combustion interne monté dans un véhicule, incluant un dispositif épurateur d'air (40) présentant un boîtier épurateur d'air (41) compartimenté par un élément épurateur d'air (44) dans une chambre de non-purification (Ca) et une chambre de purification (Cb) ;
dans laquelle un tuyau d'admission (31) s'étendant depuis une tête de cylindre (24) du moteur à combustion interne (20) monté dans un véhicule et la chambre de purification (Cb) dans le boîtier épurateur d'air (41) sont maintenus en communication fluidique l'un avec l'autre par un tuyau de passage de liaison d'admission (34) ; dans lequel :
le tuyau de passage de liaison d'admission (34) est constitué d'un tuyau de passage de liaison d'admission interne (35) disposé dans la chambre de purification (Cb) dans le boîtier épurateur d'air (41) et un tuyau de passage de liaison d'admission externe (36) contigu au tuyau de passage de liaison d'admission interne (35) ; et
**caractérisé en ce que** :
le tuyau de passage de liaison d'admission interne (35) est divisé en deux demi-tuyaux de passage de liaison (35U, 35D) combinés ensemble, le long d'un plan incluant sensiblement un axe central du tuyau de passage de liaison d'admission interne (35) ; et **en ce que** :
le tuyau de passage de liaison d'admission externe (36) s'étend hors du boîtier épurateur d'air (41) ;
le tuyau de passage de liaison d'admission interne (35) présente une pluralité de parties coudées sur un plan d'axe central (S) incluant l'axe central du tuyau de passage de liaison d'admission interne (35), et est constitué d'une paire de demi-tuyaux de passage de liaison supérieur (35U) et de demi-tuyaux de passage de liaison inférieur (35D) combinés ensemble, qui sont divisés par le plan d'axe central (S) ;
le tuyau de passage de liaison d'admission interne (35) présente une extrémité aval (35b) ajustée dans une extrémité amont (36b) du tuyau de passage de liaison d'admission externe (36) qui est ajusté dans le boîtier épurateur d'air (41) ;
le tuyau de passage de liaison d'admission interne (35) présente des dents d'engagement aval supérieures et inférieures (35Up, 35Dp) s'engageant et couplées à des languettes d'engagement supérieures et inférieures (36p, 36p) prévues sur le tuyau de passage de liaison d'admission externe (36) ; et
le boîtier épurateur d'air (41) est pourvu de saillies d'engagement (43U, 43D) présentant des broches d'engagement (43Uq, 43Dq) sur leurs extrémités distales, les broches d'engagement (43Uq, 43Dq) s'engageant dans des trous d'engagement ouverts vers l'avant (35Uqh, 35Dqh) définis dans des éléments d'engagement en amont supérieurs et inférieurs (35Uq, 35Dq) sur le tuyau de passage de liaison d'admission interne (35), soutenant ainsi le tuyau de passage de liaison d'admission interne (35).

2. Structure d'admission pour un moteur à combustion interne monté dans un véhicule selon la revendication 1, dans laquelle le tuyau de passage de liaison d'admission interne (35) est fait de résine coulée.

3. Structure d'admission pour un moteur à combustion interne monté dans un véhicule selon la revendication 1 ou 2, dans laquelle :
le tuyau de passage de liaison d'admission externe (36) s'étend vers l'avant à partir du boîtier épurateur d'air (41) et est maintenu en communication fluidique avec le tuyau d'admission (31) à travers un corps d'étranglement (33) ; et
un axe central du tuyau de passage de liaison d'admission externe (36) et l'axe central du tuyau de passage de liaison d'admission interne (35) qui est contigu au tuyau de passage de liaison d'admission externe (36) se trouvent sensiblement dans le même plan incliné vers l'avant et vers le bas à partir d'un plan horizontal (H).

4. Structure d'admission pour un moteur à combustion interne monté dans un véhicule selon l'une quelconque des revendications 1 à 3, dans laquelle :
le tuyau de passage de liaison d'admission interne (35) est couplé à une extrémité du tuyau de passage de liaison d'admission externe (36) ajusté dans et soutenu par le boîtier épurateur d'air (41) ; et
chacun des demi-tuyaux de passage de liaison (35U, 35D) assemblés du tuyau de passage de liaison d'admission interne (35) est soutenu par le boîtier épurateur d'air (41).

5. Structure d'admission pour un moteur à combustion interne monté dans un véhicule selon l'une quelconque des revendications 1 à 4, dans laquelle :
un passage d'aération est défini dans la chambre de purification (Cb) dans le boîtier épurateur d'air (41) ; et
le passage d'aération est constitué d'un premier passage d'aération (B1) présentant une partie avant maintenue en communication fluidique avec un tuyau d'aération (82) disposé à l'extérieur du boîtier épurateur d'air (41) et s'étendant obliquement vers l'arrière et vers le haut, et un second passage d'aération (B2) contigu à l'extrémité arrière du premier passage d'aération (B1), le second passage d'aération (B2) étant compartimenté par une nervure (48) et s'étendant vers le bas jusqu'à une surface de fond de boîtier sur laquelle est disposée un tuyau de drainage (84).

6. Structure d'admission pour un moteur à combustion interne monté dans un véhicule selon la revendication 5, dans laquelle le premier passage d'aération (B1) est défini comme un passage en forme de canal sur une marche (43Rd) faisant saillie vers l'intérieur depuis une paroi latérale de boîtier (43R) du boîtier épurateur d'air (41) dans le sens de la largeur du véhicule, par une plaque latérale (47) allongée dans les directions avant et arrière et fixée à la marche (43Rd).
